# EUROPEAN PATENT SPECIFICATION

(11) **EP 3 933 977 B1**
(45) Date of publication and mention of the grant of the patent: **06.09.2023**
(21) Application number: 19916927.7
(22) Date of filing: 29.11.2019
(51) Int. Cl.: H01M 4/36, H01M 4/505, H01M 4/525, H01M 10/0525, H01M 4/131

(54) **POSITIVE ELECTRODE ACTIVE MATERIAL FOR NONAQUEOUS ELECTROLYTE SECONDARY BATTERY AND NONAQUEOUS ELECTROLYTE SECONDARY BATTERY**
POSITIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT
MATÉRIAU ACTIF D'ÉLECTRODE POSITIVE POUR BATTERIE SECONDAIRE À ÉLECTROLYTE NON AQUEUX ET BATTERIE SECONDAIRE À ÉLECTROLYTE NON AQUEUX

(30) Priority: 28.02.2019 JP 2019035172
(43) Date of publication of application: 05.01.2022
(73) Proprietor: Panasonic Intellectual Property Management Co., Ltd., Osaka-shi, Osaka 540-6207 (JP)
(72) Inventor: WATANABE, Hiroki, Chuo-ku, Osaka-shi, Osaka 540-6207 (JP); DONOUE, Kazunori, Chuo-ku, Osaka-shi, Osaka 540-6207 (JP); HIRATSUKA, Hidekazu, Chuo-ku, Osaka-shi, Osaka 540-6207 (JP)
(74) Representative: Vigand, Philippe
(86) International application number: PCT/JP2019/046736
(87) International publication number: WO 2020/174794

(56) References cited:
- EP-A1- 1 174 937
- EP-A1- 2 882 014
- EP-A2- 2 672 552
- EP-A2- 3 435 454
- WO-A1-2010/029745
- WO-A1-2017/208703
- JP-A- 2015 018 803

## Description

### TECHNICAL FIELD

The present disclosure relates to a positive electrode active material for a non-aqueous electrolyte secondary battery, and a non-aqueous electrolyte secondary battery.

### BACKGROUND ART

As a positive electrode active material for a non-aqueous electrolyte secondary battery significantly contributing to a larger capacity of a non-aqueous electrolyte secondary battery, Ni-containing lithium composite oxides having a high Ni content have attracted an attention recently. There are known methods for achieving a larger capacity of a non-aqueous electrolyte secondary battery by enhancing the packing density of the positive electrode mixture layer using two different positive electrode active materials for a non-aqueous electrolyte secondary battery each having a different average secondary particle size to extend the specific surface area of the positive electrode active materials (e.g., see Patent Literature 1).

### CITATION LIST

### PATENT LITERATURE

PATENT LITERATURE 1: Japanese Unexamined Patent Application Publication No. 2011-113825

### SUMMARY

### TECHNICAL PROBLEM

As the specific surface area of the positive electrode active material is extended, however, the amount of dissolution of Ni included in the positive electrode active material may increase. Dissolution of Ni from the positive electrode active material may cause an increase in the resistance or an internal short circuit of a non-aqueous electrolyte secondary battery.

It is an advantage of the present disclosure to provide a positive electrode active material that can accomplish a non-aqueous electrolyte secondary battery in which an increase in the resistance and occurrence of an internal short circuit are prevented while a higher capacity is achieved.

### SOLUTION TO PROBLEM

A positive electrode active material for a non-aqueous electrolyte secondary battery according to one aspect of the present disclosure is a positive electrode active material for a non-aqueous electrolyte secondary battery, including a Ni-containing lithium composite oxide A and a Ni-containing lithium composite oxide B, wherein the Ni-containing lithium composite oxide A contains 55 mol% or more of Ni based on the total number of moles of the metal elements except for Li, the Ni-containing lithium composite oxide B contains Ti and Ni, the content of Ni in the Ni-containing lithium composite oxide B is 55 mol% or more based on the total number of moles of the metal elements except for Ti and Li, the Ni-containing lithium composite oxide A has an average primary particle size of 1 µm or more and an average secondary particle size of 2 µm to 6 µm, the average primary particle size of the Ni-containing lithium composite oxide B is 0.05 µm or more and is smaller than the average primary particle size of the Ni-containing lithium composite oxide A, the average secondary particle size of the Ni-containing lithium composite oxide B is 10 µm to 20 µm, and the ratio between the Ni-containing lithium composite oxide A and the Ni-containing lithium composite oxide B is 5:95 to 55:45 in terms of mass ratio.

A non-aqueous electrolyte secondary battery according to one aspect of the present disclosure comprises a positive electrode including the above positive electrode active material, a negative electrode, and a non-aqueous electrolyte.

### ADVANTAGEOUS EFFECT OF INVENTION

According to the positive electrode active material for a non-aqueous electrolyte secondary battery according to one aspect of the present disclosure, it is possible to provide a non-aqueous electrolyte secondary battery in which an increase in the resistance and occurrence of an internal short circuit are prevented while a higher capacity is achieved.

### BRIEF DESCRIPTION OF DRAWING

FIG. 1 is a sectional view of a non-aqueous electrolyte secondary battery, which is one example of the embodiment.
FIG. 2 is a schematic view illustrating a Ni-containing lithium composite oxide A as an exemplary embodiment.
FIG. 3 is a schematic view illustrating a Ni-containing lithium composite oxide B as an exemplary embodiment.

### DESCRIPTION OF EMBODIMENTS

When the packing density of the positive electrode mixture layer is enhanced using two positive electrode active materials for a non-aqueous electrolyte secondary battery each having a different average secondary particle size (hereinafter, may be referred to as the positive electrode active material) to extend the specific surface area of the positive electrode active material, as described above, the non-aqueous electrolyte secondary battery can be made to have a larger capacity, but the amount of dissolution of Ni included in the positive electrode active material may increase. When a large amount of Ni is dissolved from the positive electrode active material, there arises a problem in that an increase in the resistance of the battery degrades the battery characteristics, and additionally, formation of Li dendrites originating at the Ni dissolved raises the risk of an internal short circuit. As a result of earnest studies on the problem, the present inventor has found that the problem can be solved by using two positive electrode active materials satisfying certain conditions and allowing one of the positive electrode active materials to contain Ti, the positive electrode active material having a smaller average primary particle size and a larger average secondary particle size than those of the other positive electrode active material. In other words, a portion of Mn is substituted by Ti so as not to substantially change the battery capacity while the specific surface area of the positive electrode active material is extended by raising the content of Ni to achieve a large capacity of the battery. This can prevent dissolution of Ni while the high capacity is maintained.

Hereinafter, one example of the embodiment of the non-aqueous electrolyte secondary battery according to the present disclosure will be described in detail. Hereinafter, a cylindrical battery in which an electrode assembly having a wound type is housed in a cylindrical battery case is exemplified. The electrode assembly may be not limited to the wound type and may be a laminated type formed by alternately laminating a plurality of positive electrodes and a plurality of negative electrodes, one by one, with separators therebetween. The battery case, which is not limited to cylindrical, may be of rectangular, coin-shaped, or the like or may be a battery case constituted by a laminate sheet including a metal layer and a resin layer.

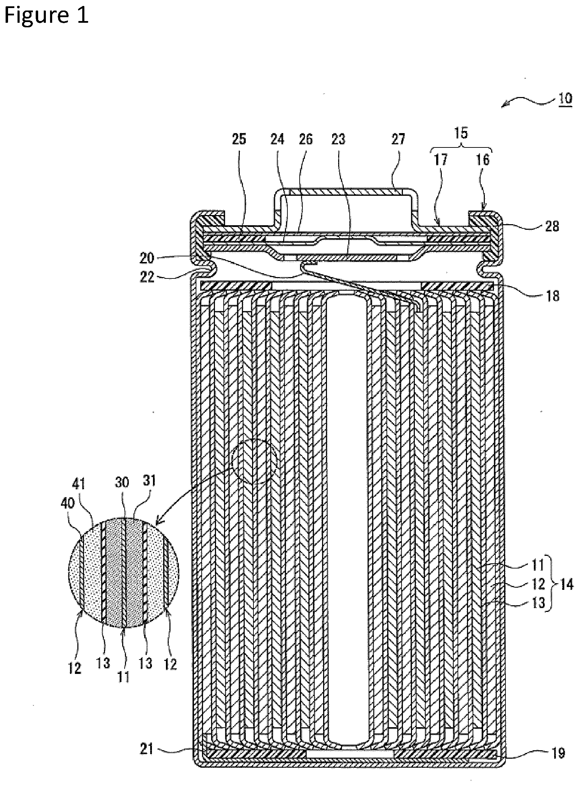

FIG. 1 is a sectional view of a non-aqueous electrolyte secondary battery 10, which is one example of the embodiment. As exemplified in FIG. 1, the non-aqueous electrolyte secondary battery 10 comprises an electrode assembly 14, a non-aqueous electrolyte (not shown), and a battery case 15 that houses the electrode assembly 14 and non-aqueous electrolyte. The electrode assembly 14 has a wound structure in which a positive electrode 11 and a negative electrode 12 are wound together with a separator 13 therebetween. The battery case 15 is composed of a bottomed cylindrical exterior can 16 and a sealing assembly 17 blocking the opening of the exterior can 16.

The electrode assembly 14 is constituted by the elongate positive electrode 11, the elongate negative electrode 12, the two elongate separators 13, a positive electrode tab 20 bonded to the positive electrode 11, and a negative electrode tab 21 bonded to the negative electrode 12. The negative electrode 12 is formed to have slightly larger dimensions than those of the positive electrode 11 in order to prevent precipitation of lithium. In other words, the negative electrode 12 is formed longer in the longitudinal direction and the width direction (lateral direction) than the positive electrode 11. The two separators 13 are formed to have at least slightly larger dimensions than those of the positive electrode 11 and are disposed to sandwich the positive electrode 11, for example.

The non-aqueous electrolyte secondary battery 10 comprises insulating plates 18 and 19 each disposed above and under the electrode assembly 14. In the example shown in FIG. 1, the positive electrode tab 20 attached to the positive electrode 11 extends through a through-hole in the insulating plate 18 to the side of the sealing assembly 17, and the negative electrode tab 21 attached to the negative electrode 12 extends outside the insulating plate 19 to the side of the bottom of the exterior can 16. The positive electrode tab 20 is connected to the lower surface of the bottom plate 23 of the sealing assembly 17, by means of welding or the like. The cap 27 of the sealing assembly 17 electrically connected to the bottom plate 23, serves as the positive electrode terminal. The negative electrode tab 21 is connected to the inner surface of the bottom of the exterior can 16 by means of welding or the like, and the exterior can 16 serves as the negative electrode terminal.

The exterior can 16 is, for example, a bottomed cylindrical metal container. The gasket 28 is provided between the exterior can 16 and the sealing assembly 17 to seal the inner space of the battery case 15. The exterior can 16 has a projecting portion 22 to support the sealing assembly 17, the projecting portion being formed by externally pressing the portion of the side wall, for example. The projecting portion 22 is preferably annularly formed along the peripheral direction of the exterior can 16, supporting the sealing assembly 17 by the upper surface thereof.

The sealing assembly 17 has a structure in which the bottom plate 23, a lower vent member 24, an insulating member 25, an upper vent member 26, and the cap 27 are layered, in the order presented, from the side of the electrode assembly 14. The members constituting the sealing assembly 17 each have, for example, a disk shape or a ring shape, and the members except for the insulating member 25 are each electrically connected to one another. The lower vent member 24 and the upper vent member 26 are connected to each other at respective middle portions and the insulating member 25 is interposed between respective circumferences. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks, and gas is emitted from the opening of the cap 27.

Hereinafter, the positive electrode 11, the negative electrode 12, the separator 13, and the non-aqueous electrolyte constituting the non-aqueous electrolyte secondary battery 10, particularly a positive electrode active material included in the positive electrode mixture layer 31 constituting the positive electrode 11 will be described in detail.

### [Positive Electrode]

The positive electrode 11 has a positive electrode current collector 30 and a positive electrode mixture layer 31 formed on both the surfaces of the positive electrode current collector 30. Foil of a metal that is stable in the electric potential range of the positive electrode 11 such as aluminum and an aluminum alloy, a film with such a metal disposed as an outer layer, and the like can be used for the positive electrode current collector 30. The positive electrode mixture layer 31 includes a positive electrode active material, a conductive agent, and a binder. The thickness of the positive electrode mixture layer 31 is 10 µm to 150 µm, for example, on one side of the positive electrode current collector 30. The positive electrode 11 can be produced by coating a positive electrode mixture slurry including a positive electrode active material, a conductive agent, a binder, and the like on a surface of the positive electrode current collector 30, drying the coating, and compressing the dried coating to form the positive electrode mixture layer 31 on both the surfaces of the positive electrode current collector 30.

Examples of the conductive agent included in the positive electrode mixture layer 31 include carbon materials such as carbon black, acetylene black, Ketjen black, and graphite. Examples of the binder included in the positive electrode mixture layer 31 include fluorine resins such as polytetrafluoroethylene (PTFE) and polyvinylidene fluoride (PVdF), polyacrylonitrile (PAN), polyimides, acrylic resins, and polyolefins. These resins may be combined with carboxymethyl cellulose (CMC) or a salt thereof, polyethylene oxide (PEO), or the like.

The positive electrode active material included in the positive electrode mixture layer 31 includes Ni-containing lithium composite oxides A and B. In other words, the positive electrode active material includes two Ni-containing lithium composite oxides A and B, which are two composite oxides each having a different average primary particle size and average secondary particle. The Ni-containing lithium composite oxide A is a composite oxide including Li and Ni. The Ni-containing lithium composite oxide B is a composite oxide including Li, Ni, and Ti. The positive electrode mixture layer 31 may include other positive electrode active material than the Ni-containing lithium composite oxides A and B as long as objects of the present disclosure are not compromised, but in the present embodiment, only the Ni-containing lithium composite oxides A and B are included as the positive electrode active material.

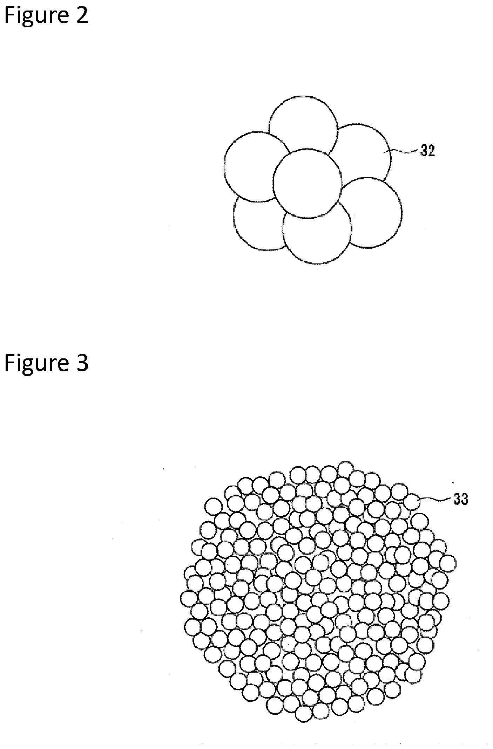

FIG. 2 is a schematic view illustrating the Ni-containing lithium composite oxide A, and FIG. 3 is a schematic view illustrating the Ni-containing lithium composite oxide B. As shown in FIG. 2 and FIG. 3, the Ni-containing lithium composite oxides A and B each are a secondary particle formed by aggregation of primary particles 32 and 33, respectively. The Ni-containing lithium composite oxide A (secondary particle) has a particle size smaller than that of the Ni-containing lithium composite oxide B (secondary particle). In contrast, the primary particles 32 constituting the Ni-containing lithium composite oxide A are larger than the primary particles 33 constituting the Ni-containing lithium composite oxide B. Combining the Ni-containing lithium composite oxides A and B can raise the packing density of the positive electrode active material in the positive electrode mixture layer 31 to thereby make the capacity of the battery larger.

In view of a larger capacity, the Ni-containing lithium composite oxide A is only required to have a proportion of Ni of 55 mol% or more and has a proportion of preferably 70 mol% or more and more preferably 80 mol% or more, based on the total number of moles of the metal elements expect for Li. The Ni-containing lithium composite oxide A can include at least one element and the like other than Ni selected from, for example, Mn, Co, Mg, Zr, Mo, W, Cr, V, Ce, Ti, Fe, Si, K, Ga, In, Ca, and Na. Among these elements, the content of Ti is preferably 0.01 mol% or less based on the total number of moles of Ni, Co, and Mn in the Ni-containing lithium composite oxide A, and more preferably, no Ti is substantially included. The Ni-containing lithium composite oxide A preferably also contains at least Mn or Co, and further, more preferably contains at least one metal element selected from Mg, Zr, Mo, W, Cr, V, Ce, Ti, Fe, K, Ga, and In. In the Ni-containing lithium composite oxide A, excessive Ni causes the crystal structure to be unstabilized. Thus, allowing the Ni-containing lithium composite oxide A to contain an appropriate amount of Mn or Co, more preferably Mn, can stabilize the crystal structure. In the Ni-containing lithium composite oxide A, the content of Mn can be, for example, 5 mol% to 35 mol% based on the total number of moles of the metal elements except for Li. Also, in the Ni-containing lithium composite oxide A, the content of Co can be, for example, 5 mol% to 35 mol% based on the total number of moles of the metal elements except for Li. The content of Li based on the total number of moles of transition metals in the mixture A is preferably 100 mol% to 115 mol% and more preferably 105 mol% to 107 mol%.

One preferable example of the Ni-containing lithium composite oxide A is a composite oxide represented by the general formula Li_{α}NiₓCo_{y}Mn_{z}M_{(1-x-y-z)}O₂, where 1.00 ≤ α ≤ 1.15, 0.55 ≤ x ≤ 0.9, 0.05 ≤ y ≤ 0.35, 0.05 ≤ z ≤ 0.35, 0.1 ≤ y + z ≤ 0.45, and M is an element other than Li, Ni, Co, and Mn. M in the formula is at least one element selected from, for example, Mg, Zr, Mo, W, Cr, V, Ce, Ti, Fe, K, Ga, and In.

In view of a larger capacity, the Ni-containing lithium composite oxide B is only required to have a proportion of Ni of 55 mol% or more and has a proportion of Ni of preferably 70 mol% or more and more preferably 80 mol% or more, based on the total number of moles of the metal elements expect for Li and Ti.

The Ni-containing lithium composite oxide B further contains Ti. Solid dissolution of Ti in the Ni-containing lithium composite oxide B causes Ti to substitute Mn. This enables the crystal structure of the Ni-containing lithium composite oxide B to be stabilized and dissolution of Ni included in the Ni-containing lithium composite oxide B to be prevented. Accordingly, when the Ni-containing lithium composite oxide B contains Ti, dissolution of Ni is prevented, and thus, an increase in the resistance and occurrence of an internal short circuit of the battery can be prevented. In the Ni-containing lithium composite oxide B, the content of Ti is, for example, 0.1 mol% to 1 mol% and preferably 0.4 mol% to 0.6 mol% based on the total number of moles of Ni, Co, and Mn. When the content of Ti is 0.1 mol% or more, the crystal structure of the Ni-containing lithium composite oxide B is stabilized to thereby enable dissolution of Ni included in the Ni-containing lithium composite oxide B to be prevented. When the content of Ti is 1 mol% or less, the amount of Ti substituting Mn can be the minimum required, and thus the battery can have a larger capacity.

The Ni-containing lithium composite oxide B can contain Mn. In the Ni-containing lithium composite oxide B, an excessive content of Ni causes the crystal structure to be unstabilized. Thus, allowing the Ni-containing lithium composite oxide B to contain an appropriate amount of Mn in addition to Ni can stabilize the crystal structure. In the Ni-containing lithium composite oxide B, the content of Mn can be, for example, 5 mol% or more and 35 mol% or less based on the total number of moles of the metal elements except for Li and Ti. Ti has an effect of preventing dissolution of not only Ni but also Mn, and thus, an effect of the present embodiment of preventing an increase in the resistance and occurrence of an internal short circuit of the battery becomes pronounced. The Ni-containing lithium composite oxide B also can contain Co. In the Ni-containing lithium composite oxide B, the content of Co can be, for example, 5 mol% or more and 35 mol% or less based on the total number of moles of the metal elements except for Li and Ti. Allowing the Ni-containing lithium composite oxide B to contain an approximate amount of Co in addition to Ni and Mn can further stabilize the crystal structure. Additionally, Ti has an effect of preventing dissolution of Co.

The Ni-containing lithium composite oxide B may include elements other than the above Ni, Ti, Mn, and Co, and examples of the elements include at least one element selected from Mg, Zr, Mo, W, Cr, V, Ce, Fe, Si, K, Ga, In, Ca, and Na. Among these elements, the Ni-containing lithium composite oxide B preferably contains at least one metal element selected from Mg, Zr, Mo, W, Cr, V, Ce, Fe, K, Ga, and In.

The content of Li based on the total number of moles of the transition metals except for Ti (e.g., Ni, Mn, and Co) in the mixture B is preferably 100 mol% to 115 mol% and more preferably 105 mol% to 107 mol%.

One preferable example of the Ni-containing lithium composite oxide A is a composite oxide represented by the general formula Li_{α}NiₓCo_{y}Mn_{z}Ti_{β}M_{(1-x-y-z)}O₂, where 1.00 ≤ α ≤ 1.15, 0.55 ≤ x ≤ 0.9, 0.05 ≤ y ≤ 0.35, 0.05 ≤ z ≤ 0.35, 0.1 ≤ y + z ≤ 0.45, 0.001 ≤ (β/x + y + z) ≤ 0.01, and M is an element other than Li, Ni, Co and Mn. M in the formula is at least one element selected from, for example, Mg, Zr, Mo, W, Cr, V, Ce, Fe, K, Ga, and In.

As shown in FIG. 2 and FIG. 3, the primary particles 33 of the Ni-containing lithium composite oxide B are smaller than the primary particles 32 of the Ni-containing lithium composite oxide A, and the secondary particles of the Ni-containing lithium composite oxide B are larger than those of the Ni-containing lithium composite oxide A. Thus, the specific surface area of the Ni-containing lithium composite oxide B is larger than the specific surface area of the Ni-containing lithium composite oxide A, and when the Ni-containing lithium composite oxide B is made to contain Ti, the effect of preventing dissolution of Ni and Mn becomes large. Ti may be contained not only in the Ni-containing lithium composite oxide B but also in the Ni-containing lithium composite oxide A.

The Ni-containing lithium composite oxide A has an average primary particle size (hereinafter, may be referred to as the "average primary particle size A") of 1 µm or more and an average secondary particle size (hereinafter, may be referred to as the "average secondary particle size A") of 2 µm to 6 µm. The average primary particle size of the Ni-containing lithium composite oxide B (hereinafter, may be referred to as the "average primary particle size B") is 0.05 µm or more and is smaller than the average primary particle size A, and the average secondary particle size of the Ni-containing lithium composite oxide B (hereinafter, may be referred to as the "average secondary particle size B") is 10 µm to 20 µm. This enables the capacity of the battery to be larger.

In view of a larger capacity of the battery and prevention of dissolution of Ni and Mn, the average primary particle size A of the Ni-containing lithium composite oxide A is preferably 1 µm to 5 µm and more preferably 1 µm to 4 µm, and the average primary particle size B of the Ni-containing lithium composite oxide B is preferably 0.05 µm to 3 µm and more preferably 0.05 µm to 2 µm.

The average primary particle sizes A and B can be determined by analyzing a cross-sectional SEM image observed with a scanning electron microscope (SEM). For example, the positive electrode 11 is embedded into a resin, and a cross section of the positive electrode mixture layer 31 is prepared by cross section polisher (CP) processing or the like. The cross section is imaged by an SEM. Alternatively, each powder of the Ni-containing lithium composite oxides A and B is embedded into a resin, and each particle cross section of the composite oxides is prepared by CP processing or the like. The cross section is imaged by an SEM. Then, 30 primary particles are randomly selected from this cross-sectional SEM image. The grain boundaries of 30 particles of the selected primary particles are observed, and the contour of the primary particles is identified. Then, the major axis (longest diameter) of each of the 30 primary particles is determined, and the average value thereof is taken as the average primary particle size A or B.

The average secondary particle sizes A and B are also can be determined from the above cross-sectional SEM image. Specifically, 30 secondary particles (Ni-containing lithium composite oxide A or B) are randomly selected from the above cross-sectional SEM image. The grain boundaries of the selected 30 secondary particles are observed, and the contour of the secondary particles is identified. Then, the major axis (longest diameter) of each of the 30 secondary particles is determined, and the average value thereof is taken as the average secondary particle size A or B.

In view of making the capacity of the battery larger by enhancing the amount to be filled and the like, the ratio between the Ni-containing lithium composite oxide A and the Ni-containing lithium composite oxide B is only required to be 5:95 to 55:45 and is preferably 10:90 to 50:50 or 25:75 to 45:55, in terms of mass ratio.

Hereinafter, one example of a method for producing the Ni-containing lithium composite oxides A and B will be described in detail.

The Ni-containing lithium composite oxide A is synthesized by firing a mixture A including a lithium compound and a transition metal compound containing 55 mol% or more of Ni. Examples of the lithium compound included in the mixture A include Li₂CO₃, LiOH, Li₂O₃, Li₂O, LiNO₃, LiNO₂, Li₂SO₄, LiOH H₂O, LiH, and LiF.

The median particle size (D50) of the transition metal compound included in the mixture A is preferably, for example, 1 µm to 6 µm and more preferably 3 µm to 4 µm. Here, the median particle size means a median particle size (D50) at an integrated volume of 50% in the particle size distribution analyzed according to the laser diffraction/scattering method. The firing temperature of the mixture A is preferably 850°C to 960°C and more preferably 880°C to 930°C. The firing time is, for example, 3 hours to 10 hours.

The Ni-containing lithium composite oxide B is synthesized by firing a mixture B including a lithium compound, a transition metal compound containing 55 mol% or more of Ni, and a Ti-containing compound. The lithium compound contained in the mixture B may be the same or different from the lithium compound contained in the mixture A. Examples of the Ti-containing compound contained in the mixture B include titanium oxide (TiO₂) and lithium titanate.

The median particle size (D50) of the transition metal compound included in the mixture B is preferably, for example, 7 µm to 20 µm and more preferably 10 µm to 18 µm. The firing temperature of the mixture B is preferably 860°C to 990°C and more preferably 880°C to 960°C. The firing time is, for example, 3 hours to 10 hours. The firing is conducted, for example, under a flow of oxygen or air. When the median particle size (D50) of the transition metal compound, the content of Li in the mixture B, the firing temperature, and the like are within the ranges, adjustment of the average primary particle size and the average secondary particle size, and the crystallite size of the Ni-containing lithium composite oxide A within the above ranges is easily achieved.

### [Negative Electrode]

The negative electrode 12 has a negative electrode current collector 40 and a negative electrode mixture layer 41 formed on both the surfaces of the negative electrode current collector 40. Foil of a metal that is stable in the electric potential range of the negative electrode 12, such as copper, a copper alloy, or the like, a film with such a metal disposed as an outer layer, and the like can be used for the negative electrode current collector 40. The negative electrode mixture layer 41 includes a negative electrode active material and a binder. The thickness of the negative electrode mixture layer 41 is 10 µm to 150 µm on one side of the negative electrode current collector 40. The negative electrode 12 can be produced by coating a negative electrode mixture slurry including a negative electrode active material, a binder, and the like on the surface of the negative electrode current collector 40, drying the coating, and rolling the dried coating to form the negative electrode mixture layer 41 on both the surfaces of the negative electrode current collector 40.

The negative electrode active material included in the negative electrode mixture layer 41 is not particularly limited as long as being capable of reversibly intercalating and releasing lithium ions. A carbon material such as graphite is generally used. Graphite may be either of natural graphite such as flaky graphite, massive graphite, or earthy graphite or artificial graphite such as massive artificial graphite, or graphitized mesophase carbon microbeads. Alternatively, as the negative electrode active material, a metal to be alloyed with Li such as Si and Sn, a metal compound including Si, Sn, or the like, a lithium - titanium composite oxide, or the like may be used. Such negative electrode active materials with a carbon coating provided thereon may also be used. For example, a Si-containing compound represented by SiOₓ (0.5 ≤ x ≤ 1.6), a Si-containing compound including Si particulates dispersed in a lithium silicate phase represented by Li_{2y}SiO_{(2+y)} (0 < y < 2), or the like may be used in combination with graphite.

As the binder included in the negative electrode mixture layer 41, as in the case of the positive electrode 11, a fluorine-containing resin such as PTFE and PVdF, PAN, a polyimide, an acryl resin, a polyolefin, or the like may be used, but styrene - butadiene rubber (SBR) is preferably used. The negative electrode mixture layer 41 may also include CMC or a salt thereof, polyacrylic acid (PAA) or a salt thereof, polyvinyl alcohol (PVA), or the like.

### [Separator]

For example, an ion-permeable and insulating porous sheet is used as the separator 13. Specific examples of the porous sheet include a microporous thin film, woven fabric, and nonwoven fabric. Suitable examples of the material for the separator include polyolefins such as polyethylene and polypropylene, and cellulose. The separator 13 may have a single-layer structure or may have a layered structure. On the surface of the separator 13, a layer of a resin having high heat resistance such as an aramid resin or a filler layer including an inorganic compound filler may be provided.

### [Non-Aqueous Electrolyte]

For example, the non-aqueous electrolyte includes a non-aqueous solvent and an electrolyte salt dissolved in the non-aqueous solvent. As the non-aqueous solvent, esters, ethers, nitriles such as acetonitrile, amides such as dimethylformamide, and mixed solvents of two or more thereof can be used. The non-aqueous solvent may contain a halogen-substituted product formed by replacing at least one hydrogen atom of any of the above solvents with a halogen atom such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the esters include cyclic carbonate esters, such as ethylene carbonate (EC), propylene carbonate (PC), and butylene carbonate; chain carbonate esters, such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and chain ethers such as, 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, n is 1 or 2), LiB₁₀Cl₁₀, LiCl, LiBr, LiI, chloroborane lithium, lithium lower aliphatic carboxylate, borates such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊₁SO₂) (where 1 and m are each an integer of 0 or more). These lithium salts may be used singly or two or more thereof may be mixed and used. Among these, LiPF₆ is preferably used in view of ionic conductivity, electrochemical stability, and other properties. The concentration of the lithium salt is, for example, 0.8 mol to 1.8 mol per 1 L of a non-aqueous solvent. Vinylene carbonate or a propanesultone additive may be further added.

### Examples

Hereinafter, the present disclosure will be further described with reference to examples, but the present disclosure is not intended to be limited to the following examples.

### <Example 1>

### [Synthesis of Ni-containing Lithium Composite Oxide A]

A transition metal hydroxide represented by Ni_{0.60}C_{0.20}Mn_{0.20}(OH)₂ (D50: 3.7 µm) and LiOH were mixed such that the molar ratio of Li based on the total amount of Ni, Co and Mn was 1.07 to thereby obtain a mixture A. Thereafter, the mixture A was fired at 925°C for 10 hours under a flow of oxygen to thereby obtain a Ni-containing lithium composite oxide A.

The Ni-containing lithium composite oxide A had an average primary particle size of 4 µm and an average secondary particle size of 6 µm. The methods for measuring the average primary particle size and the average secondary particle size are as described above.

### [Synthesis of Ni-containing Lithium Composite Oxide B]

To a transition metal hydroxide represented by Ni_{0.60}Co_{0.20}Mn_{0.20}(OH)₂ (D50: 17.0 µm), LiOH and TiO₂ were mixed such that the molar ratio of Li based on the total amount of Ni, Co, and Mn was 1.07 and the molar ratio of Ti based on the total amount of Ni, Co, and Mn was 0.005 to thereby obtain mixture B. Thereafter, the mixture B was fired at 885°C for 10 hours under a flow of oxygen to thereby obtain a Ni-containing lithium composite oxide B.

The average primary particle size of the Ni-containing lithium composite oxide B was smaller than that of the Ni-containing lithium composite oxide A and was 1 µm. The average secondary particle size of the Ni-containing lithium composite oxide B was larger than that of the Ni-containing lithium composite oxide A and was 17 µm.

An X-ray diffraction pattern of the Ni-containing lithium composite oxide B obtained by an X-ray diffraction method was analyzed. As a result, the crystallite size was 135 nm. Conditions for measurement for the X-ray diffraction method and the like are as described above.

### [Production of Positive Electrode]

As the positive electrode active material, a mixture of the Ni-containing lithium composite oxides A and B at a mass ratio of 50:50 was used. Mixed were 97.5 mass% of the positive electrode active material, 1 mass% of carbon black, and 1.5 mass% of polyvinylidene fluoride. This mixture was mixed with N-methyl-2-pyrrolidone (NMP) to prepare a positive electrode mixture slurry. The slurry was coated onto both the surfaces of a positive electrode current collector having a thickness of 15 µm composed of aluminum foil. After the coating was dried, the coating was rolled using a rolling roller to produce a positive electrode in which a positive electrode mixture layer was formed on both the surfaces of the positive electrode current collector. A portion at which no positive electrode mixture layer was formed was provided on the end portion in the longitudinal direction of the positive electrode current collector, and a positive electrode tab was attached to the portion. The thickness of the positive electrode mixture layer was set to about 125 µm, and the thickness of the positive electrode was set to about 140 µm.

### [Production of Negative Electrode]

As a negative electrode active material, 96 parts by mass of graphite and 4 parts by mass of SiOₓ (x = 0.94) having carbon coating thereon were used. The negative electrode active material, a dispersion of SBR, and a sodium salt of CMC were mixed at a mass ratio of 100:1:1, and the mixture was mixed with water to prepare a negative electrode mixture slurry. The slurry was coated onto both the surfaces of a negative electrode current collector composed of copper foil. After the coating was dried, the coating was rolled using a rolling roller to produce a negative electrode in which a negative electrode mixture layer was formed on both the surfaces of the negative electrode current collector. A portion at which no negative electrode mixture layer was formed was provided on the end portion in the longitudinal direction of the negative electrode current collector, and a negative electrode tab was attached to the portion.

### [Preparation of Non-aqueous Electrolyte]

To a mixed solvent prepared by mixing FEC, EP (ethyl propionate), EMC, and DMC at a volume ratio of 25:30:15:30, LiPF₆ was added at a concentration of 1.0 mol/L and LiBF₄ was added at a concentration of 0.05 mol/L. Further, 0.3 mass% (with respect to the solvent) of vinylene carbonate and 0.5 mass% (with respect to the solvent) of a propanesultone additive were added thereto to prepare a non-aqueous electrolyte.

### [Production of Non-aqueous Electrolyte Secondary Battery]

The above positive electrode and the above negative electrode were laminated with the separator therebetween to produce a laminate-type electrode assembly. A single-layered polypropylene separator was used as the separator. The electrode assembly was inserted in an exterior body formed of an aluminum laminate sheet, the above non-aqueous electrolyte solution was injected thereto, and the opening exterior body was sealed to produce a test cell (laminate cell).

### [Evaluation of Battery Capacity]

The above non-aqueous electrolyte secondary battery was charged under an environment of 25°C with respect to the cell battery capacity at a constant current of 0.1 It for an hour, and then subjected to aging at 60°C for 10 hours. Thereafter, a constant current charging was carried out at a constant current of 0.3 It to a battery voltage of 4.3 V, and further, a constant voltage charging was carried out at a voltage of 4.3 V to a current value of 30 mA. Thereafter, discharging was carried out at a constant current of 0.3 It to a voltage of 2.5 V, and a rest of 15 minutes was taken. Then, discharging was further carried out at a constant current of 0.1 It to a voltage of 2.5 V, and the battery capacity (discharge capacity) was determined.

### [Evaluation of Amount of Ni and Mn Dissolved]

The above non-aqueous electrolyte secondary battery was fully charged and then stored in a 60°C thermostatic chamber for 14 days. Then, the non-aqueous electrolyte secondary battery after a lapse of 14 days was disassembled in a glove box, and the negative electrode was taken out. The negative electrode taken out was immersed in 100 ml of a 0.2 N hydrochloric acid aqueous solution at 100°C for 10 minutes to thereby dissolve the Mn and Ni deposited on the negative electrode. Further, after the negative electrode was filtered off, the filtrate was made up to volume in a volumetric flask to thereby obtain a sample. The amount of Mn and Ni in the sample was quantitatively determined by inductively coupled plasma-atomic emission spectrometry (ICP-AES), and the amount of each of Mn and Ni dissolved was calculated by the following equation. A lower amount of each of Mn and Ni dissolved means that dissolution of each of Mn and Ni from the positive electrode active material in the above storage process was prevented.

Amount of Mn or Ni dissolved = mass of Mn or Ni / mass of negative electrode

### <Comparative Example 1>

A non-aqueous electrolyte secondary battery was produced in the same manner as in Example 1 except that no TiO₂ was added in the synthesis of the Ni-containing lithium composite oxide B, and the performance evaluation was conducted in the same manner as in Example.

The Ni-containing lithium composite oxide B of Comparative Example 1 had an average primary particle size of 1 µm and an average secondary particle size of 17 µm, which were equivalent to those in Example 1. The crystallite size of the Ni-containing lithium composite oxide B was 135 nm, which was also equivalent to that of Example 1.

### <Comparative Example 2>

A non-aqueous electrolyte secondary battery was produced in the same manner as in Example 1 except that, as the positive electrode active material, only the Ni-containing lithium composite oxide B was used without Ni-containing lithium composite oxide A contained in the synthesis of the Ni-containing lithium composite oxide B, and the performance evaluation was conducted in the same manner as in Example 1.

The evaluation results of Example 1 and Comparative Examples 1 to 2 are shown in Table 1. The battery capacity and the amounts of Ni and Mn dissolved of Comparative Examples 1 to 2 are relative values, with the values of Example 1 being 100.

**[Table 1]**

| | | | Example 1 | Comparative Example 1 | Comparative Example 2 |
|---|---|---|---|---|---|
| Positive electrode active material | Ni-containing lithium composite oxide A | Primary particle size (µm) | 4 | 4 | --- |
| | | Secondary particle size (µm) | 6 | 6 | --- |
| | Ni-containing lithium composite oxide B | Primary particle size (µm) | 1 | 1 | 1 |
| | | Secondary particle size (µm) | 17 | 17 | 17 |
| | | Ti content (mol%) | 0.5 | 0 | 0.5 |
| Evaluation results | Battery capacity | | 100 | 100 | 99 |
| | Amount dissolved | Ni | 100 | 114 | 134 |
| | | Mn | 100 | 114 | 140 |

The battery capacity of Comparative Example 2 has become smaller than the battery capacity of each of Example 1 and Comparative Example 1. Use of the positive electrode active material obtained by mixing two Ni-containing lithium composite oxides that are different in the average primary particle size and average secondary particle size achieved a battery capacity larger than the battery capacity achieved by use of the positive electrode active material comprising one Ni-containing lithium composite oxide. The amounts of Ni and Mn dissolved in the battery of Example 1 were smaller than those of the batteries of Comparative Examples 1 to 2. In other words, while a positive electrode active material obtained by mixing the two Ni-containing lithium composite oxides that are different in the average primary particle size and average secondary particle size was used, the Ni-containing lithium composite oxide having a smaller average primary particle size and a larger average secondary particle size was caused to contain Ti. This enabled prevention of dissolution of Ni, Mn, and the like, which dissolution is responsible for an increase in the resistance and occurrence of an internal short circuit, while achieving a higher capacity. Although the amount of Co dissolved was not measured, it is assumed that dissolution of Co was also prevented.

### REFERENCE SIGNS LIST

10 non-aqueous electrolyte secondary battery
11 positive electrode
12 negative electrode
13 separator
14 electrode assembly
15 battery case
16 exterior can
17 sealing assembly
18, 19 insulating plate
20 positive electrode tab
21 negative electrode tab
22 projecting portion
23 bottom plate
24 lower vent member
25 insulating member
26 upper vent member
27 cap
28 gasket
30 positive electrode current collector
31 positive electrode mixture layer
32, 33 primary particle
40 negative electrode current collector
41 negative electrode mixture layer.

## Claims

1. A positive electrode active material for a non-aqueous electrolyte secondary battery (10), including:
a Ni-containing lithium composite oxide A; and
a Ni-containing lithium composite oxide B, wherein
the Ni-containing lithium composite oxide A contains 55 mol% or more of Ni based on a total number of moles of metal elements except for Li,
the Ni-containing lithium composite oxide B contains Ti and Ni,
a content of Ni in the Ni-containing lithium composite oxide B is 55 mol% or more based on a total number of moles of metal elements except for Ti and Li,
the Ni-containing lithium composite oxide A has an average primary particle size of 1 µm or more and an average secondary particle size of 2 µm to 6 µm,
an average primary particle size of the Ni-containing lithium composite oxide B is 0.05 µm or more and is smaller than the average primary particle size of the Ni-containing lithium composite oxide A,
an average secondary particle size of the Ni-containing lithium composite oxide B is 10 µm to 20 µm, wherein the particle sizes are measured according to the description, and
a ratio between the Ni-containing lithium composite oxide A and the Ni-containing lithium composite oxide B is 5:95 to 55:45 in terms of mass ratio.

2. The positive electrode active material for a non-aqueous electrolyte secondary battery (10) according to claim 1, wherein
the Ni-containing lithium composite oxide B further includes Mn and Co, and
a content of Ti in the Ni-containing lithium composite oxide B is 0.1 mol% to 1 mol% based on a total number of moles of Ni, Co, and Mn.

3. A non-aqueous electrolyte secondary battery (10) comprising:
a positive electrode (11) including the positive electrode active material for a non-aqueous electrolyte secondary battery (10) according to claim 1 or 2;
a negative electrode (12); and
a non-aqueous electrolyte.

## Patentansprüche

1. Positivelektroden-Aktivmaterial für Sekundärbatterien (10) mit wasserfreiem Elektrolyt, das Folgendes umfasst:
ein Ni-haltiges Lithium-Verbundoxid A; und
ein Ni-haltiges Lithium-Verbundoxid B, wobei
das Ni-haltige Lithium-Verbundoxid A, bezogen auf eine Gesamtanzahl von Molen von Metallelementen außer Li, 55 Mol-% oder mehr Ni enthält,
das Ni-haltige Lithium-Verbundoxid B Ti und Ni enthält,
ein Gehalt an Ni in dem Ni-haltigen Lithium-Verbundoxid B, bezogen auf eine Gesamtanzahl von Molen von Metallelementen außer Ti und Li, 55 Mol-% oder höher beträgt,
das Ni-haltige Lithium-Verbundoxid A eine durchschnittliche Primärpartikelgröße von 1 µm oder größer und eine durchschnittliche Sekundärpartikelgröße von 2 µm bis 6 µm aufweist,
eine durchschnittliche Primärpartikelgröße des Ni-haltigen Lithium-Verbundoxids B 0,05 µm oder größer ist und kleiner ist als die durchschnittliche Primärpartikelgröße des Ni-haltigen Lithium-Verbundoxids A,
eine durchschnittliche Sekundärpartikelgröße des Ni-haltigen Lithium-Verbundoxids B 10 µm bis 20 µm beträgt, wobei die Partikelgrößen gemäß der Beschreibung gemessen werden, und
ein Verhältnis zwischen dem Ni-haltigen Lithium-Verbundoxid A und dem Ni-haltigen Lithium-Verbundoxid B hinsichtlich des Massenverhältnisses 5:95 bis 55:45 beträgt.

2. Positivelektroden-Aktivmaterial für Sekundärbatterien (10) mit wasserfreiem Elektrolyt nach Anspruch 1, wobei
das Ni-haltige Lithium-Verbundoxid B ferner Mn und Co umfasst, und
ein Gehalt an Ti in dem Ni-haltigen Lithium-Verbundoxid B, bezogen auf eine Gesamtanzahl von Molen von Ni, Co und Mn, 0,1 Mol-% bis 1 Mol-% beträgt.

3. Sekundärbatterie mit wasserfreiem Elektrolyt (10), die Folgendes umfasst:
eine Positivelektrode (11), die das Positivelektroden-Aktivmaterial für eine Sekundärbatterie (10) mit wasserfreiem Elektrolyt nach Anspruch 1 oder 2 umfasst;
eine Negativelektrode (12); und
einen wasserfreien Elektrolyten.

## Revendications

1. Matériau actif d'électrode positive pour une batterie rechargeable à électrolyte non aqueux (10), comprenant :
un oxyde composite de lithium contenant du Ni A ; et
un oxyde composite de lithium contenant du Ni B, dans lequel l'oxyde composite de lithium contenant du Ni A contient 55 % en moles ou plus de Ni par rapport au nombre total de moles d'éléments métalliques à l'exception de Li,
l'oxyde composite de lithium contenant du Ni contient Ti et Ni,
la teneur en Ni de l'oxyde composite de lithium contenant du Ni B est de 55 % en moles ou plus par rapport au nombre total de moles d'éléments métalliques à l'exception de Ti et Li,
l'oxyde composite de lithium contenant du Ni A a une granulométrie primaire moyenne de 1 µm ou plus et une granulométrie secondaire moyenne de 2 µm à 6 pm,
la granulométrie primaire moyenne de l'oxyde composite de lithium contenant du Ni B est de 0,05 µm ou plus et est inférieure à la granulométrie primaire moyenne de l'oxyde composite de lithium contenant du Ni A,
la granulométrie secondaire moyenne de l'oxyde composite de lithium contenant du Ni B est de 10 µm à 20 µm,
dans lequel les granulométries sont mesurées conformément à la description, et
le rapport entre l'oxyde composite de lithium contenant du Ni A et l'oxyde composite de lithium contenant du Ni B est de 5/95 à 55/45 en termes de rapport en masse.

2. Matériau actif d'électrode positive pour une batterie rechargeable à électrolyte non aqueux (10) selon la revendication 1, dans lequel
l'oxyde composite de lithium contenant du Ni B contient en outre Mn et Co, et
la teneur en Ti de l'oxyde composite de lithium contenant du Ni B est de 0,1 % en moles à 1 % en moles par rapport au nombre total de moles de Ni, Co et Mn.

3. Batterie rechargeable à électrolyte non aqueux (10) comprenant :
une électrode positive (11) contenant le matériau actif d'électrode positive pour une batterie rechargeable à électrolyte non aqueux (10) selon la revendication 1 ou 2 ;
une électrode négative (12) ; et
un électrolyte non aqueux.
